# EUROPEAN PATENT APPLICATION

(11) **EP 3 196 086 A1**
(43) Date of publication of application: **26.07.2017**
(21) Application number: 16152233.9
(22) Date of filing: 21.01.2016
(51) Int. Cl.: B60T 17/22, G01M 17/08

(54) **APPARATUS AND METHOD FOR TESTING BRAKE-RUNNING CONDITIONS**

(71) Applicant: KNORR-BREMSE Systeme für Schienenfahrzeuge GmbH, 80809 München (DE)
(72) Inventor: Kremer, Miklos, 1215 Budapest (HU)

(57) **Abstract**

The present invention relates to an apparatus and a method of testing braking running conditions of a brake system of a rail vehicle, wherein a console (4) for positioning and fixation of a caliper or tread brake unit (5) of the brake system is mounted to a bogie frame or undercarriage part (2) and a changeable wheel or brake disc (6) is rotated by a motor (7). The motor (7) is arranged in a manner so that the rotated wheel or brake disc (6) can be decelerated by the caliper or tread brake unit (5), wherein a plurality of actuators (3) of a 3D actuator system are controlled to generate a 3D movement of the bogie frame or undercarriage part (2) in order to simulate natural vehicle motions. At least one operational or design parameter generated by said 3D movement is measured to determine optimum operational conditions or design input.

## Description

The present invention relates to an apparatus and a method for a testing braking running conditions in order to evaluate operation conditions and design characteristic.

According to currently applicable regulations of the International Union of Railways (UIC), the German Federal Regulation on Light Rail Systems and Metros (BoStrab) and the Association of American Rail Roads (AAR), specific brake tests, with respective regional emphasis, for a pneumatic brake system of the type of interest here are required to diagnose the correct brake function of a rail vehicle. The functional state of a pneumatic brake system can be controlled on the basis of the measurement values obtained by the brake test. This ensures the safety of the brake system and a servicing operation may be initiated as a result. In this case, conclusions can also be drawn about the compressed-air device to be serviced, for example the brake control device, and the faults therein by analyzing the measurement results obtained. To achieve comparable measurement results, the brake tests are usually standardized in respect of the measurement values which are to be obtained, the test pressures and other parameters.

The US 2013/0125637 A1 discloses a mobile measurement device for carrying out a brake test in a rail vehicle, in particular having a pneumatic brake system on which are formed externally accessible measurement ports for pressure sensors whose electric measurement signal is processed by a mobile electronic measurement unit which is connected to the sensors locally thereto, which measurement unit is provided with an input for control and with a display for a user dialog and for displaying measurement results.

Similarly, "Smart Sensor System for Monitoring Railcar Braking Systems", Innovations, Deserving, Exploratory Analysis (IDEA) Program Final Report for the Period September 2005 through May 2008, describes brake test system comprised of three subsystems: a sensor for measuring forces, a wireless network for communicating the information so that some action may be taken, and an energy harvesting device, in lieu of conventional batteries, to make the system maintenance-free has been proposed.

However, these conventional test system are based on the vehicles' natural structure and require at least a prototype of the railway vehicle to be available. It would be desirable to be able to test brake installation and running before the vehicle is produced, so that the vehicle or installation parameters could be changed before the vehicle is produced to thereby help optimizing the vehicle before the prototype is ready.

It is therefore an object of the present invention to provide a brake test system and method by means of which braking running conditions can be tested before a prototype of the railway vehicle has been finalized.

This object is solved by an apparatus according to claim 1, a method according to claim 7 and a computer program product according to claim 8.

Accordingly, a plurality of actuators of a 3D actuator system are controlled to generate a 3D movement of the bogie frame or undercarriage part in order to simulate natural vehicle motions. At least one operational or design parameter generated by said 3D movement is measured to determine optimum operational conditions or design input. It is therefore possible to test brake installation and running so as to help optimizing a brake system before a prototype is ready and before the vehicle is produced. The vehicle or installation parameters can thus be changed before the vehicle is produced.

The proposed test rig is adapted to handle the dry friction in a physically real manner, i.e., with real friction speed, thermal and wear effects, so that friction-generated vibrations and thermo-elastic instability acting e.g. on the caliper and/or on its mounting, and the braking torque are close or identical to physical reality. These factors or parameters cannot be well simulated in conventional systems. Due to the fact that other factors acting at the same time and coming from vehicle motions, that are also determining the load of the caliper, its mounting, the braking torque etc., can be numerically well simulated, the test environment can be focused on necessary and sufficient elements which are less easy to simulate.

The controlling and measuring steps of the proposed method may be implemented by a computer program product comprising code means for producing these steps when run on a computer device. The computer program product may be provided on a computer readable medium or may be downloadable from a local or public network, such as the internet.

Optionally, the console may be fixed to a beam of the bogie frame. Thereby, tight coupling and good transfer of the generated 3D movements to the console can be ensured.

As another option, the motor may be part of a motor and inertia system. The provision of a motor and inertia system allows good adjustment of the characteristics of the wheel or brake disc by proper selection of the inertia function. More specifically, the motor and inertia system may be adapted to adjust a rotational speed profile of the wheel or brake disc.

As a further option, the control unit may be adapted to control the plurality of actuators to simulate relative displacements between the wheel or brake disc and the bogie frame or undercarriage part.

As a still further option, the at least one operational or design parameter may be selected from forces, moments, displacements and temperatures generated in or between the bogie frame or undercarriage part, the console, the caliper or tread brake unit, or the wheel or brake disc.

Furthermore, it shall be understood that the apparatus of claim 1, the method of claim 7 and the computer program of claim 8 may have a similar and/or identical preferred embodiment, in particular, as defined in the dependent claims.

It shall further be understood that a preferred embodiment of the invention can also be any combination of the dependent claims or above embodiments with the respective independent claim.

The present invention will now be described based on embodiments with reference to the accompanying drawings in which:
- Fig. 1: shows a schematic partial structure of a brake test system according to an embodiment of the present invention; and
- Figs. 2A and 2B: show possible relative displacements between a wheel and a caliper.

In the following, preferred embodiments of the present invention will be described on the basis of a test equipment for testing realistic conditions of railway vehicles for different parameters and different track conditions.

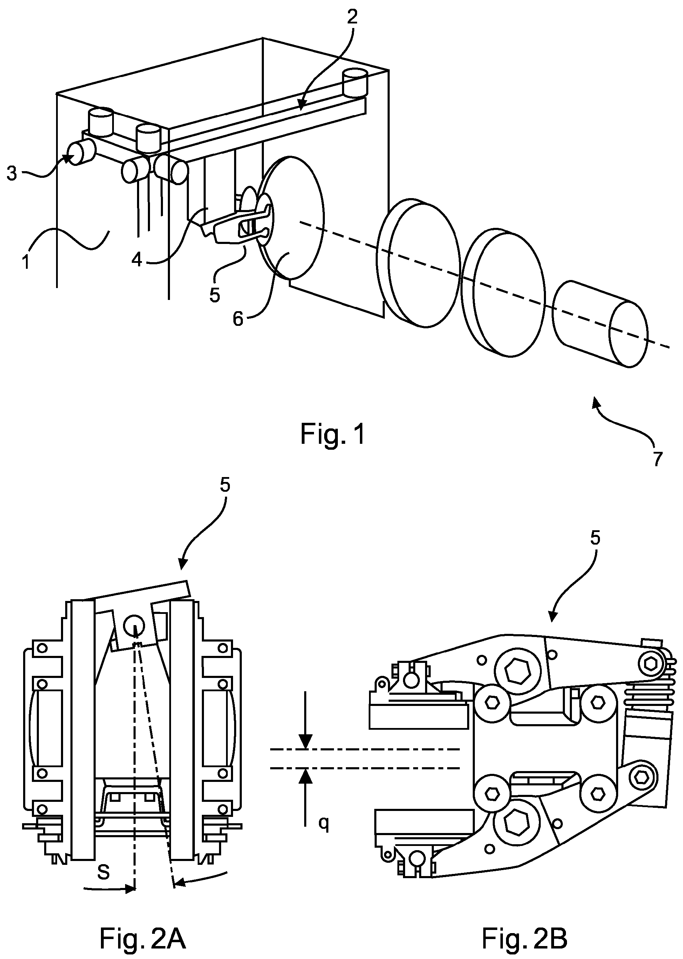

Fig. 1 shows a schematic partial structure of a test apparatus embodied as a test rig for simulating relative spatial displacements together with the real speed rotation of the wheel and/or disc for a unit of a disc and a caliper or a unit of a wheel and a tread brake. The test rig comprises a housing 1, a real or dummy bogie frame 2 or part thereof (or railway undercarriage in case of some vehicle types), one or more actuator means 3 fixed to the bogie frame 2, a console 4 providing positioning and fixation of a caliper or tread brake unit 5, e.g. as in the real rail vehicle, firmly fixed to a beam of the bogie frame 2, wherein the brake caliper or tread brake unit 5 is fixed to the console 4. The test rig further comprises a wheel and/or brake disc 6 rotated by a motor and inertia system 7, as shown in Fig. 1. The brake caliper 5 and the wheel 6 is changeable according to specific test requirements. The motor and inertia system 7 may comprise a main axle in bearings with attachable flywheels on concrete substructure. A plurality of changeable consoles 4 may be provided for different calipers or tread brake units 5, with measurement cells. The actuators 3 may be dynamically or statically adjustable with force measurement cells.

The actuators 3 (e.g., pneumatic or hydraulic actuators) are responsible for manipulation of the bogie frame 2 in order to simulate relative displacement between the bogie frame 2 and the wheelset originating e.g. from vehicle-track interaction, load, hunting and/or riding. The motor and inertia system 7 is responsible for adjusting the rotational speed profile of the wheel 6. The motor and the actuators 3 are controlled by at least one control unit (not shown). At least one measurable operational or design parameter (e.g., forces, moments, displacements, temperatures etc.) generated in or between any part of the bogie frame 2, console 4, caliper or tread brake unit 5, wheel or disc 6 is measured by measurement means (e.g., corresponding sensor(s) applied at predetermined locations of respective parts, not shown in Fig. 1) for further purposes, e.g., for determining optimum operational conditions or as design input.

Figs. 2A and 2B show relative displacements between a wheel and a caliper 5. More specifically, in Fig. 2A a one-sided deflection of the caliper 5 is shown, which results in an angular displacement S and a nun-unitary wear of the brake pads on both sides of the caliper 5. Furthermore, Fig. 2B shows a transverse displacement q, which results in different distances between the brake pads of the caliper 5 and the wheel at both sides and different wear at the respective brake pads. Such kinds of displacement can be simulated by the test rig of the present embodiment.

Contrary to conventional rig-based test systems, the present embodiment is adapted to consider relative (static and dynamic) displacements between the caliper 5 and the wheelset mounted disc 6, with all their effects, such as changes in brake torque, forces and kinematic loads on the caliper 5, non-equal wear, etc. Thus, not the vehicle itself generates (natural) motions, but they are simulated by corresponding control of the actuators 3. Hence, no vehicle or prototype of the vehicle is necessary. Rather, a short part of the bogie beam or a dummy is enough, because it is actuated by the test rig's 3D actuation arrangement or system as a part of the test rig. A vehicle's natural motions (in case of different track and bogie and running gear cases) are simulated by a computer and the test rig's control unit controls the 3D actuation or movement accordingly by corresponding control of the actuators 3.

To summarize, an apparatus and a method of testing braking running conditions of a brake system of a rail vehicle have been described, wherein a console 4 for positioning and fixation of a caliper or tread brake unit 5 of the brake system is mounted to a bogie frame or undercarriage part 2 and a changeable wheel or brake disc 6 is rotated by a motor 7. The motor 7 is arranged in a manner so that the rotated wheel or brake disc 6 can be decelerated by the caliper or tread brake unit 5, wherein a plurality of actuators 3 of a 3D actuator system are controlled to generate a 3D movement of the bogie frame or undercarriage part 2 in order to simulate natural vehicle motions. At least one operational or design parameter generated by said 3D movement is measured to determine optimum operational conditions or design input.

It is noted that present invention is not restricted to the above preferred embodiments and can be implemented for any brake systems of trains, locomotives, coaches, freight cars, trams, metros, monorails, specific rail vehicles or on-track machines.

## Claims

1. A test apparatus for testing braking conditions of a brake system of a rail vehicle with real friction speeds and relative displacements corresponding to running motions of said rail vehicle, said apparatus comprising:
• a bogie frame or undercarriage part (2) to which a console (4) for positioning and fixation of a caliper or tread brake unit (5) of said brake system is mounted;
• a motor (7) for rotating a changeable wheel or brake disc (6) and arranged in a manner so that the rotated wheel or brake disc (6) can be decelerated by said caliper or tread brake unit (5);
• a three-dimensional, 3D, actuator arrangement comprising a plurality of actuators (3);
• a control unit for controlling said plurality of actuators (3) of said 3D actuator system to generate a 3D movement of said bogie frame or undercarriage part (2) in order to simulate natural vehicle motions; and
• measuring means for measuring at least one operational or design parameter generated by said 3D movement.

2. The apparatus according to claim 1, wherein said console (4) is fixed to a beam of said bogie frame (4).

3. The apparatus according to claim 1 or 2, wherein said motor is part of a motor and inertia system (7).

4. The apparatus according to claim 3, wherein said motor and inertia system (7) is adapted to adjust a rotational speed profile of said wheel or brake disc (6).

5. The apparatus according to any one of the preceding claims, wherein said control unit is adapted to control said plurality of actuators to simulate relative displacements between said wheel or brake disc (5) and said bogie frame or undercarriage part (2).

6. The apparatus according to any one of the preceding claims, wherein said at least one operational or design parameter is selected from forces, moments, displacements and temperatures generated in or between said bogie frame or undercarriage part (2), said console (4), said caliper or tread brake unit (5), or said wheel or brake disc (6).

7. A method of testing braking conditions of a brake system of a rail vehicle with real friction speeds and relative displacements corresponding to running motions of said rail vehicle, said method comprising:
• mounting a console (4) for positioning and fixation of a caliper or tread brake unit (5) of said brake system to a bogie frame or undercarriage part (2);
• rotating a changeable wheel or brake disc (6) by a motor (7);
• arranging said motor (7) in a manner so that the rotated wheel or brake disc (6) can be decelerated by said caliper or tread brake unit (5);
• controlling a plurality of actuators (3) of a 3D actuator system to generate a 3D movement of said bogie frame or undercarriage part (2) in order to simulate natural vehicle motions; and
• measuring at least one operational or design parameter generated by said 3D movement.

8. A computer program product comprising code means for producing the controlling and measuring steps of method claim 7 when run on a computer device.
